# EUROPEAN PATENT SPECIFICATION

(11) **EP 0 705 676 B1**
(45) Date of publication and mention of the grant of the patent: **19.09.2001**
(21) Application number: 95118668.3
(22) Date of filing: 09.10.1992
(51) Int. Cl.: B29C 45/26

(54) **Metal mould device and a method to mould a disc substrate**
Metallische Formvorrichtung und Verfahren zum Formen eines Plattensubstrats
Dispositif de moule métallique et procédé pour mouler un substrat de disque

(30) Priority: 12.10.1991 JP 29255891; 08.01.1992 JP 1944592; 21.04.1992 JP 12666292
(43) Date of publication of application: 10.04.1996
(62) Divisional of application: 92309222.5
(73) Proprietor: SONY CORPORATION, Tokyo 141 (JP)
(72) Inventor: Kudo, Junichiro, c/o Patents Division, Shinagawa-ku, Tokyo 141 (JP); Shimizu, Jun, c/o Patents Division, Shinagawa-ku, Tokyo 141 (JP)
(74) Representative: Boden, Keith McMurray

(56) References cited:
- EP-A- 0 051 253
- PATENT ABSTRACTS OF JAPAN vol. 16, no. 105 (P-1325), 16 March 1992 & JP-A-03 280279 (RICOH CO LTD), 11 December 1991,
- PATENT ABSTRACTS OF JAPAN vol. 17, no. 427 (M-1459), 9 August 1993 & JP-A-05 092492 (SONY CORP), 16 April 1993,

## Description

The invention relates to a metal mould device and a method to mould a disc substrate.

Such a substrate may be a recording medium for information signals, such as an optical disc or a magneto-optical disc. A metal mould device may be used to mould the disc substrate by moulding synthetic resin, such as polycarbonate resin.

An optical disc has hitherto been proposed which makes use of a disc substrate formed of synthetic resin such as light-transmitting polycarbonate resin. This kind of optical disc may be exemplified by either a read-only type disc or a magneto-optical disc with which it is possible to re-write previously recorded information signals. The read-only optical disc includes a disc substrate having its major surface formed with a pattern of recesses and lands corresponding to information signals, such as predetermined musical sound signals, or pits, and a reflective film produced by e.g. vacuum deposition of aluminum or like material. The overwrite type magneto-optical disc, capable of re-writing information signals, has a signal recording layer having a magnetic film on its major surface on which a pre-groove constituting a recording track for recording predetermined information signals is formed.

A disc substrate, formed of synthetic resin and constituting an optical disc or a magneto-optical disc as described above, can be produced using a metal mould device and injection moulding.

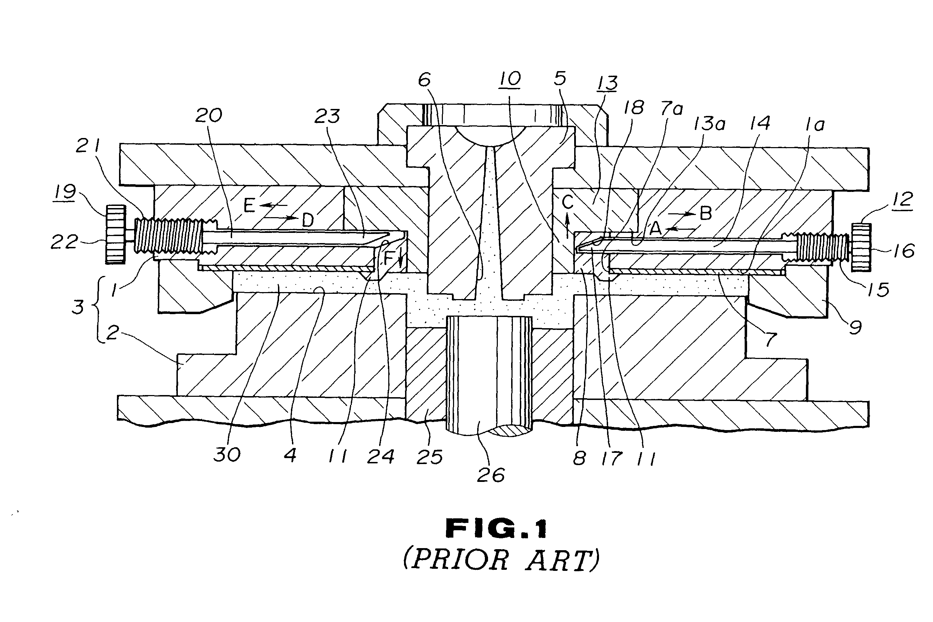

A metal mould device of previously proposed kind to mould a disc substrate can be formed as shown in Figure 1 of the accompanying drawings and is made up of a fixed metal mould 1 and a movable metal mould 2 placed facing the fixed metal mould 1. A mould cavity 4 corresponding in shape to the disc substrate 30 to be moulded is defined between the fixed mould 1 and the movable mould 2 making up a metal mould 3.

At a mid position of the fixed metal mould 1, there is provided a sprue bushing 5 for introduction of synthetic resin, such as molten polycarbonate resin, from a injection moulding machine into the mould cavity 4. A resin injection port 6 is bored through the sprue bushing 5. The molten synthetic resin, supplied from the injection moulding machine, is injected into the mould cavity 4 through the resin injection port 6.

A stamper 7 to mould the pattern of recesses and lands corresponding to the information signals, or pits, and a pre-groove constituting a recording track(s), is loaded on a surface of the fixed mould 1 defining the mould cavity 4. The stamper 7 is in the form of a disc having a central aperture 7a and is attached to the fixed metal mould by having the rim of the central aperture 7a supported by an inner stamper holder 8 and by having its outer periphery supported by an outer stamper holder 9.

The inner stamper holder 8, supporting the rim of the central aperture 7a at an inner edge of the stamper 7, is loaded on the fixed metal mould 1 by being fitted to the outer periphery of a stamper holder support 10 which is fitted to an outer side of the sprue bushing 5. An annular stamper supporting pawl 11 is formed at a radially outer edge of the stamper holder 8 to support the rim of the central aperture 7a of the stamper 7.

The inner stamper holder 8 is pressed and supported against a lateral surface 13a of a flange 13 of the stamper holder support 10 by a stamper holder fixing unit 12 which is passed through the inside of the fixed metal support 1. The inner stamper holder fixing unit 12 is made up of a holder fixing lever 14 traversing the fixed metal mould 1, a threaded part 15 connected to the holder fixing lever 14 and to reciprocate the holder fixing lever 14 in the directions shown by arrows A and B in Figure 1, and a knob 16 to rotate the threaded part 15. A wedge-shaped engaging supporting part 17 having an inclined lateral face is formed at a distal end of the holder fixing lever 14. The engaging supporting part 17 is engaged in a wedge-shaped mating engaging recess 18 formed on an outer lateral side of the inner stamper holder 8.

In the above-described construction of the inner stamper holder fixing unit 12, the threaded part 15 is rotated by means of the knob 16 to introduce the holder fixing lever 14 in the direction of arrow A in Figure 1 progressively to engage the wedge-shaped engaging supporting part 17 in the mating wedge-shaped engaging recess 18 to cause the inner stamper holder 8 to bear against the flange 13 of the stamper holder support 10. The stamper 7, having its inner edge supported by the stamper-supporting pawl 11, is loaded in position by being thrust and supported against a stamper contact surface 1a of the fixed metal mould 1.

The fixed metal mould 1 is provided with an inner stamper holder releasing unit 19 to release the pressure support of the stamper 7 relative to the fixed metal mould 1 by the inner stamper holder 8. Similarly to the above-described inner stamper fixing unit 12, the inner stamper holder releasing unit 19 is made up of a holder releasing lever 20 traversing the fixed metal mould 1, a threaded part 21 connected to the holder releasing lever 20 and to reciprocate the holder releasing lever 20 in the directions shown by arrows D and E in Figure 1, and a knob 22 to rotate the threaded part 21. A wedge-shaped releasing part 23 having an inclined lateral face is formed at a distal end of the releasing lever 20. The releasing part 23 is engaged in a notch-shaped engaging surface 24 formed on an end face of the inner stamper holder 8.

To dismount the inner stamper holder 8 fitted on the outer periphery of the stamper holder support 10 to detach the stamper 7 from the fixed metal mould 1, the holder fixing lever 14 is retracted in the direction shown by arrow B in Figure 1 to disengage the engaging supporting part 17 from the engaging recess 18. The threaded part 21 is then rotated by means of the knob 22 to advance the holder releasing lever 20 in a direction shown by the arrow D in Figure 1 progressively to engage the releasing part 23 with the inclined surface 24 to move the inner stamper holder 8 in the direction shown by the arrow F in Figure 1 to release the stamper from the stamper supporting pawl 11. The stamper 7 may now be detached from the fixed metal mould 1.

The movable metal mould 2, arranged facing the fixed metal mould 1 and movable towards and away from the fixed metal mould 1, is provided with a sleeve 25 which is reciprocably mounted at the centre of the mould cavity 4 to release a moulded disc substrate 30. A punch 26 to punch a centre hole 30a in the disc substrate 30 is reciprocably mounted at the centre of the sleeve 25.

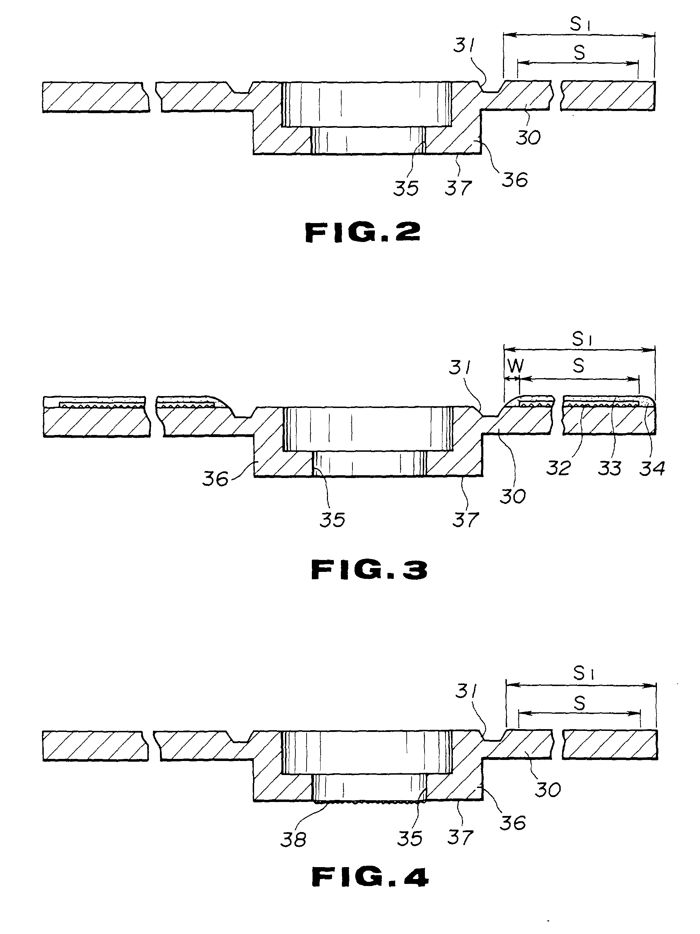

To mould the disc substrate 30, using the above-described metal mould device, the movable mould 2 is caused to approach the fixed metal mould to establish a mould clamping state. In this mould clamping state, molten synthetic resin, such as molten polycarbonate resin, supplied from the injection moulding machine, in injected and charged into the mould cavity 4 via the resin injection port 6 of the sprue bushing 5. The movable mould 2 is caused to approach closer to the fixed metal mould 1 to compress the synthetic resin charged into the mould cavity 4 under cooling to mould the disc substrate 30 corresponding in shape to the mould cavity 4. The punch 26 is then moved to punch the centreing aperture. The movable mould 2 is moved away from the fixed mould 1 to open the mould, at the same time as the sleeve 25 is projected towards the fixed metal mould 1 to release the moulded disc substrate 30 from the metal mould 3. The disc substrate 30 is taken out of the metal mould 3, using a suitable take-out unit and forms the disc substrate 30 shown in Figure 2.

In the above-described conventional metal mould device, since the stamper 7 is caused to bear against the fixed metal mould 1 by the inner stamper holder 8 provided with the stamper supporting pawl 11 which supports the rim of the central aperture 7a, the operation of attaching the stamper 7 to the fixed metal mould 1 is complicated. That is, to attach the stamper 7 to the fixed metal mould, the inner stamper holder 8 is engaged in the stamper holder support 10 and the inner stamper holder fixing unit 12 is operated to shift the inner stamper holder 8 to thrust the stamper 7 against the fixed metal mould 1 by means of the stamper supporting pawl 11, resulting in a complicated stamper attachment operation.

On the other hand, if the machining tolerance of the inner stamper holder 8 or the stamper holder support 10 to which the inner stamper holder 8 is fitted is not maintained within a narrow limit, the centre of the stamper 7 may be offset with respect to the centre of the disc substrate 30 to be moulded. If the centre of the stamper 7 is not in correct registration with the centre of the disc substrate 30, the centre of the pre-groove to form the concentric or spiral recording track(s) or pits on the major surface of the disc substrate 30 by the stamper 7 is offset from the centre of the disc substrate 30, so that the moulded product cannot be used as a disc substrate for an optical disc.

Also the stamper 7 is caused to bear against the fixed metal mould 1 by the stamper supporting pawl 11 of the inner stamper holder 8, so that, if the thrusting force exerted by the stamper supporting pawl 11 is excessive, the stamper 7 tends to be distorted or deformed, so that the rate of rejected products is likely to be increased.

The metal mould is complicated in structure by the provision of the inner stamper holder fixing unit 12 to fix and support the inner stamper holder 8 or the inner stamper holder releasing unit 19 to detach the inner stamper holder 8 from the fixed metal mould 1.

In the above-described arrangement in which the rim of the central aperture 7a of the stamper 7 is supported by the stamper supporting pawl 11 of the inner stamper holder 8 to attach the stamper 7 to the fixed metal mould 1, the stamper supporting pawl 11 protrudes towards the disc substrate moulding surface 7a of the stamper 7, so that the entire area of the moulding surface 7a cannot be utilized effectively. Thus, an annular groove 31 having a width corresponding to the stamper supporting pawl 11 is formed on an inner periphery of the disc substrate 30, as shown in Figure 2, so that a signal recording region S in which a pre-groove to form the pits or recording track(s)is formed cannot be extended to an area S₁ at an innermost region of the disc substrate 30.

Also, when the disc substrate 30 is formed as an optical disc, a reflective film or a signal recording layer 33 is deposited in the signal recording area S of the disc substrate 30 in which the pits are or the pre-groove is formed, as shown in Figure 3. A protective film 34 formed of a synthetic resin is deposited on the reflective film or the signal recording layer 33. The function of the protective film 34 is to prevent air or moisture from making contact with and attacking the reflective film or the signal recording layer 33.

Consequently, the protective film 34 needs to be firmly deposited on the disc substrate 30 so as not to be peeled off from the disc substrate 30. Also, the protective film 34 needs to cover the reflective film or the signal recording layer 33 with a thickness large enough to prevent intrusion of air or moisture into the reflective film or the signal recording layer 33.

However, if the disc substrate 30 is designed for a small-sized optical disc such that the signal recording region 32 is extended to the innermost area of the disc, the annular groove 31 is formed of a larger width at the inner side of the disc substrate 30, so that the protective film 34 at the innermost side of the disc substrate 30 can be deposited on the planar major surface of the disc substrate 30 only by a narrow width W. Consequently, the reflective film or the signal recording layer 33 cannot be covered positively by the protective layer 34 so that the reflective film or the signal recording layer 33 cannot be reliably protected against chemical attack by air or moisture.

The disc substrate 30 has a centreing aperture 35 engaged by a centreing member provided on a disc table of a disc rotating and driving unit which rotates and drives the optical disc prepared from the disc substrate 30. An annular projection or boss 36 defining the centreing aperture 35 is formed at a surface of the disc substrate 30 opposite to the surface on which the signal recording layer 33 is formed. The function of the projection 36 is to set the loading height of the disc on the disc table as well as to permit disc rotation in a horizontal position with respect to the centre of rotation of the disc table. Consequently, the end face of the projection 36 functions as a reference plane 37 to enable the disc to be attached to the disc table in a horizontal position with respect to the centre of rotation, so that it is a planar surface to maintain correct horizontality with respect to the centre of rotation.

The centreing aperture 35 provided in the disc substrate 30 is punched by a punch reciprocated in the mould cavity of the metal mould device. The aperture 35 is usually punched by actuating the punch immediately after the disc substrate 30 is moulded by injecting the synthetic resin into the mould cavity. If the centreing aperture 35 is punched while the synthetic resin injected into the mould cavity is still in the molten state and is not completely cured, punching burrs 38 tend to be produced in the proceeding direction of the punch.

If these burrs 38 are produced on the loading reference surface 37 at the end of the projection 36 or on the loading reference surface at the inner surface of the centreing aperture 35 engaged by the centreing member, the centreing aperture 35 will have less than true circularity and the reference surface 37 will not be planar, as a result of which the optical disc produced from the disc substrate 30 cannot be loaded onto a disc table with correct centreing and positioning and consequently the disc cannot be maintained in the correct horizontal state with respect to the centre of rotation of the disc table which gives rise to failure in recording or reproduction.

Patent Specification EP-A-051 253 discloses an injection moulding machine for moulding centrally apertured video information discs wherein a central region of a moulded disc substrate, held in a mould cavity of a metal mould device, is punched by a movable member projecting into the mould cavity to form a through hole.

According to one aspect of the invention there is provided a method of forming a disc substrate having a centreing recess and a reference loading plane for disc rotating and driving means, the reference loading plane being substantially parallel to a planar region on which a recording and/or reproducing light beam is incident in use, and the reference loading plane projecting from the planar region, comprising the steps of;
injecting synthetic resin into a mould cavity of a metal mould device to mould a disc substrate having a centreing recess formed therein, and
punching at least a part of the centreing recess by a movable member projecting into the mould cavity to form a through-hole.

According to a further aspect of the invention there is provided a metal mould device to mould a disc substrate having a centreing recess and a reference loading plane for disc rotating and driving means, the reference loading plane being substantially parallel to a planar region on which a recording and/or reproducing light beam is incident in use, the reference loading plane projecting from the planar region, comprising;
a fixed metal mould,
a movable metal mould mounted facing the fixed metal mould movable towards and away from the fixed metal mould and to define with the fixed metal mould a mould cavity,
a stamper mounted on at least one of the fixed metal mould and the movable metal mould and arranged within the mould cavity,
mounting means to mount the stamper on one of the fixed metal mould and the movable metal mould,
a protruding member mounted on the other of the fixed metal mould and the movable metal mould to form the centreing recess, and
a movable member arranged inwardly of the protruding member on the same axis as the protruding member, the movable member being movable relative to the other of the fixed metal mould and the movable metal mould to form a through-hole in the centreing recess.

Such a metal mould device can enable high-precision moulding of a disc substrate for a small-sized optical disc designed for high density recording of information signals, such as an optical disc having a diameter of 64 mm and capable of recording audio signals for 74 minutes.

In such a metal mould device to mould a disc substrate, an operation of loading a stamper to form pre-pits or a pre-groove to form the recording track on the disc substrate on the metal mould can be achieved easily and with correct positioning with respect to the metal mould.

In such a metal mould device pits or pre-groove to form recording track(s) may be moulded without offset or failure.

A signal recording region of a moulded optical disc may be formed over a wider area extending to an innermost region of the disc, a protective layer covering a reflective film or a signal recording layer may be deposited reliably and the reflective film or the signal recording layer may be protected reliably.

Such a method of forming a disc substrate can produce an information recording disc, in which the inner peripheral surface of the centreing aperture of the disc substrate engaged by a centreing member to centre the disc with respect to the centre of rotation of the disc table when the disc is set on the disc table and the horizontal loading reference surface of the disc with respect to the disc table may be formed highly accurately to permit the disc to be loaded in position on the disc table, and stable disc rotation can be ensured without producing failure in the recording or reproduction of information signals.

The stamper supporting means may be a vacuum suction unit or a magnetic suction unit taking advantage of a magnetic force of attraction.

The invention is diagrammatically illustrated by way of example in the accompanying drawings, in which:
Figure 1 is a schematic cross-sectional view showing a conventional metal mould device to mould a disc substrate;
Figure 2 is a cross-sectional view showing a disc substrate moulded by the conventional metal mould device;
Figure 3 is a cross-sectional view showing a protective layer formed to cover a signal recording layer deposited on a disc substrate moulded by the conventional metal mould device;
Figure 4 is an enlarged partial cross-sectional view showing a centreing aperture of a conventional magneto-optical disc;
Figure 5 is a cross-sectional view showing a disc substrate moulded in accordance with the method of the invention;
Figure 6 is a cross-sectional view of a metal mould device with synthetic resin injected thereinto according to the invention to mould a disc substrate;
Figure 7 is a cross-sectional view of the metal mould device shown in Figure 6 showing a through-hole punched in the disc substrate moulded by the metal mould device; and
Figure 8 is a cross-sectional view of a disc substrate formed by the method of the invention.

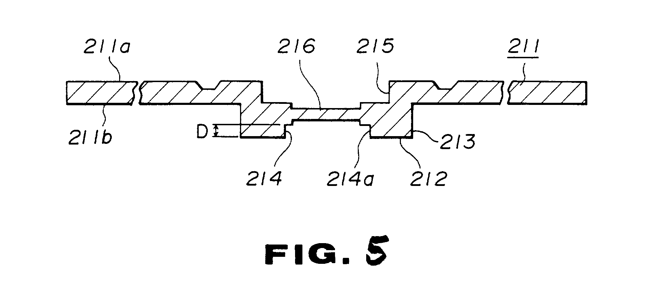

The invention can be used for forming a disc substrate 211 as shown in Figure 5. Such a disc substrate 211 can be used for fabricating an optical disc having a diameter of 64 mm and being capable of recording audio signals continuing for at least 74 minutes and may be produced with high accuracy.

The disc substrate 211 shown in Figure 5 is moulded in the shape of a disc, using a metal mould device for injection moulding. The disc substrate 211 is moulded from a polycarbonate resin having high light-transmitting properties, for example, high transparency, and a signal recording layer, on which a magneto-optical recording medium of the magneto-optical disc is deposited, is formed on a major surface 211a, on which pre-pits defining a recording track(s) are also formed simultaneously with the moulding of the disc substrate 211 by a stamper provided in the metal mould device.

The opposite major surface 211b of the disc substrate 211 is a signal readout surface which is irradiated with a light beam outgoing from an optical head when a signal recording layer is formed on the major surface 211a so that the disc substrate may be used as a magneto-optical disc.

The major surface 211b of the disc substrate 211 opposite to the major surface 211a having the signal recording layer is provided with an annular boss 213 having a horizontal loading reference plane 212 at a distal end face thereof to set the loading height of the disc on a disc table and to set the horizontal position of the disc relative to the centre of rotation of the disc table.

A centreing recess 214 is formed at the centre of the disc substrate 211 to extend from the end face of the annular boss 213 defining the above-mentioned reference plane 212 to a mid position in the thickness of the disc substrate. When the disc substrate 211, designed as a magneto-optical disc, is loaded on a disc table, the centreing recess 214 is engaged by a centreing member (not shown) of the disc table to centre the disc with respect to the centre of rotation of the disc table. The centreing recess 214 engaged by the outer peripheral surface of the centreing member has an inner peripheral surface 214a contiguous to the reference plane 212 at the end face of the annular boss 213. The inner peripheral surface 214a acts as a reference plane in loading of the disc relative to the disc table.

The centreing recess 214 has a depth D which is large enough to permit the centreing member to be engaged therein with correct centreing when the magneto-optical disc is loaded on the disc table.

A metal plate receiving recess 215, into which a metal plate attracted by a magnet provided on a disc table is fitted, is formed at the centre of the major surface 211-a of the disc substrate 211.

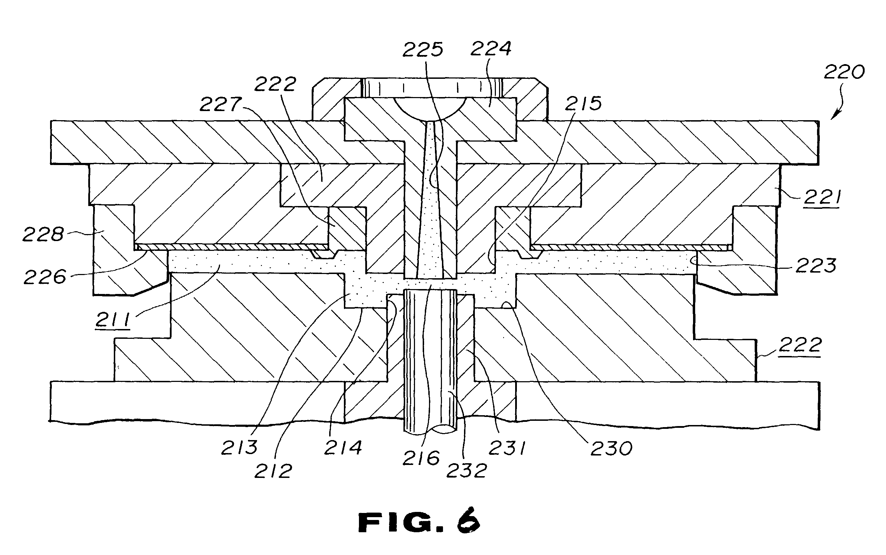

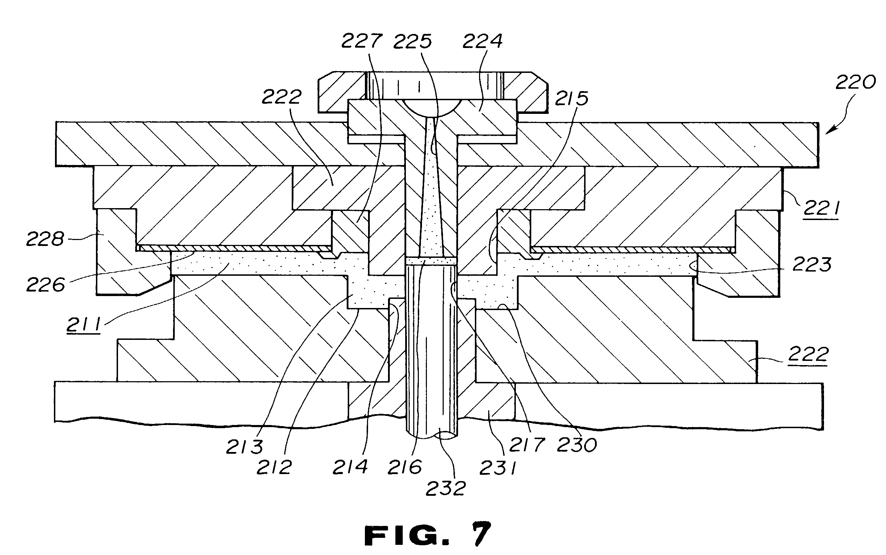

The disc substrate 211 is moulded by a metal mould device 220 constructed as shown in Figures 6 and 7.

The metal mould device 220 is made up of a fixed metal mould 221 and a movable metal mould device 222 and a mould cavity 223 to mould the disc substrate 211 is defined between the fixed metal mould 221 and the movable metal mould 222.

The fixed metal mould 221 is provided with a sprue bushing 224 which is positioned at the centre of the mould cavity 223 to allow molten polycarbonate resin from an injection moulding machine (not shown) to flow into the mould cavity 223. The molten polycarbonate resin is caused to flow into the mould cavity 223 via a resin inlet port 225 provided in the sprue bushing 224.

The distal end of the sprue bushing 224 protrudes into the mould cavity 223 beyond the distal end of an inner stamper holder 227 provided to mould the metal plate receiving recess 215 as later explained.

A stamper 226 to mould pre-pits defining the recording track(s) is provided on the surface of the fixed metal mould defining the mould cavity 223. The stamper 226 is attached to the fixed metal mould 221 by being supported by the inner stamper holder 227 and an outer stamper holder 228.

The inner stamper holder 227 to support the inner periphery of the stamper 226 is fitted to a stamper holder support 229 fitted to the sprue bushing 224, while the outer stamper holder 228 to support the outer periphery of the stamper 226 is fitted to the outer periphery of the fixed metal mould 21.

The distal end of the inner stamper holder 227 protrudes into the mould cavity 223 to mould the metal plate receiving recess 215 formed on the major surface 211a of the disc substrate 211.

A recess 230 to mould the annular boss 213 which has its distal end face formed as the reference plane 212 and a stationary protruding member 231 protruding halfway in the mould cavity 223 to mould the centreing recess 214 are provided in the movable metal mould 222 provided facing the fixed metal mould 221.

A movable member 232 operable as a punch to punch a through-hole 217 at a bottom 216 of the centreing recess 214 is provided at the centre of the stationary protruding member 231 provided in the movable metal mould 222 to mould the centreing hole 214. As shown in Figure 6, the movable member 232 is smaller in diameter than the stationary protruding member 231 and protrudes further into the mould cavity 223 than the distal end of the stationary protruding member 231.

By providing the movable member 232 in this manner, the movable member 232 may be moved without affecting the inner periphery functioning as the reference plane of the centreing hole 214 formed by the stationary protruding member 231.

When moulding the disc substrate, the molten polycarbonate resin, supplied from an injection moulding machine (not shown) is injected via the sprue bushing 224 into the mould cavity 223 of the above-described metal mould device 220 to mould the disc substrate 211 having the centreing recess 214 as shown in Figure 5.

After moulding the disc substrate 211, the movable member 232 provided in the movable metal mould 222 is protruded towards the fixed metal mould 221 by means such as a hydraulic unit, as shown in Figure 7. By protruding the movable member 232 in this manner, the through-hole 17 is punched at the bottom 216 of the centreing recess 214.

When the movable member 232 is protruded to punch the through-hole 217, the distal end of the movable member 232 is protruded from the mould cavity 232 and caused to bear against the distal end of the sprue bushing 224 provided in the fixed mould 221 to retract the sprue bushing 224 out of the mould cavity 223, as shown in Figure 7.

The movable member 232 is punched to the position shown in Figure 7 after punching the through-hole 217.

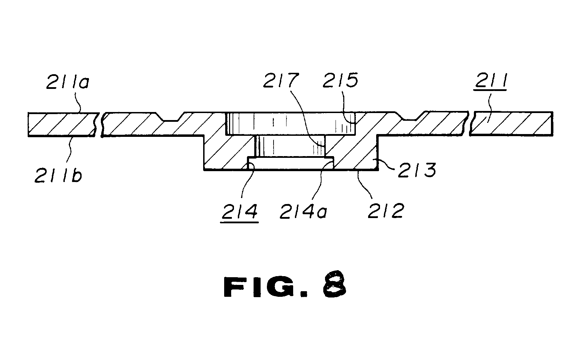

After the through-hole 217 is punched in the disc substrate 217, the disc substrate is cured within the metal mould device 220 and taken out from the mould cavity 223 as a disc substrate 211 to be used to fabricate the magneto-optical disc shown in Figure 8.

Although the foregoing description is directed to a method to form a disc substrate used for producing a magneto-optical disc, the method may be applied extensively to a disc having a centreing aperture and a reference loading plane for loading on a disc table as well as a centreing plane with respect to the disc table on the major surface of the disc substrate.

Since the disc substrate 211 produced by the above-described embodiment is applied to a magneto-optical disc provided with a metal plate for magnetic clamping, the through-hole 217 has the function of transmitting the magnetic flux from the magnet provided on the disc table when the magneto-optical disc is produced from the disc substrate 211.

The through-hole 217 of the disc substrate 211 produced in accordance with the described method may also be engaged by a grip used for transporting the disc substrate 211 in the course of a production process used for producing the information-recording disc.

## Claims

1. A method of forming a disc substrate having a centreing recess (214) and a reference loading plane (212) for disc rotating and driving means, the reference loading plane (212) being substantially parallel to a planar region (211a) on which a recording and/or reproducing light beam is incident in use, and the reference loading plane (212) projecting from the planar region (211a), comprising the steps of;
injecting synthetic resin into a mould cavity (223) of a metal mould device (220) to mould a disc substrate having a centreing recess (214) formed therein, and
punching at least a part of the centreing recess (214) by a movable member (232) projecting into the mould cavity (223) to form a through-hole (217).

2. A method according to claim 1, wherein the through-hole (217) is formed by moving the movable member (232) from the reference loading plane (212).

3. A metal mould device to mould a disc substrate having a centreing recess (214) and a reference loading plane (212) for disc rotating and driving means, the reference loading plane being substantially parallel to a planar region (211a) on which a recording and/or reproducing light beam is incident in use, the reference loading plane (212) projecting from the planar region, comprising;
a fixed metal mould (221),
a movable metal mould (222) mounted facing the fixed metal mould (221) movable towards and away from the fixed metal mould and to define with the fixed metal mould a mould cavity (223),
a stamper (226) mounted on at least one of the fixed metal mould and the movable metal mould and arranged within the mould cavity (223),
mounting means (227, 228) to mount the stamper (226) on one of the fixed metal mould and the movable metal mould,
a protruding member (231) mounted on the other of the fixed metal mould and the movable metal mould to form the centreing recess (214), and
a movable member (232) arranged inwardly of the protruding member (231) on the same axis as the protruding member (231), the movable member (232) being movable relative to the other of the fixed metal mould and the movable metal mould to form a through-hole (217) in the centreing recess (214).

## Patentansprüche

1. Verfahren zur Formung eines Plattensubstrats mit einer Zentrierungsausnehmung (214) und einer Referenz-Ladeebene (212) für eine Plattendreh- und -antriebseinrichtung, wobei die Referenz-Ladeebene (212) im wesentlichen parallel zu einem ebenen Bereich (211a) verläuft, auf den im Gebrauch ein Aufzeichnungs- und/oder Wiedergabe-Lichtstrahl auftrifft, und wobei die Referenz-Ladeebene (212) von dem ebenen Bereich (211a) absteht, umfassend die Schritte:
Einspritzen von Kunstharz in einen Formhohlraum (223) einer Metallformvorrichtung (220) zum Formen eines Plattensubstrats mit einer darin gebildeten Zentrierungsausnehmung (214) und Lochen zumindest eines Teiles der Zentrierungsausnehmung (214) durch ein in den Formhohlraum (223) hineinragendes bewegbares Glied (232) zur Bildung eines Durchgangslochs (217).

2. Verfahren nach Anspruch 1, wobei das Durchgangsloch (217) durch Bewegung des bewegbaren Gliedes (232) von der Referenz-Ladeebene (212) gebildet wird.

3. Metallformvorrichtung zur Formung eines Plattensubstrats mit einer Zentrierungsausnehmung (214) und einer Referenz-Ladeebene (212) für eine Plattendreh- und -antriebseinrichtung, wobei die Referenz-Ladeebene im wesentlichen parallel zu einem ebenen Bereich (211a) verläuft, auf den im Gebrauch ein Aufzeichnung- und/oder Wiedergabe-Lichtstrahl auftrifft, wobei die Referenz-Ladeebene (212) von dem ebenen Bereich vorsteht, umfassend:
- eine feste Metallform (221),
- eine bewegbare Metallform (222), die so angebracht ist, dass sie der festen Metallform (221) zugewandt ist, und die zu der festen Metallform und von dieser weg bewegbar ist und die mit der festen Metallform einen Formhohlraum (223) festlegt,
- einen Stempel (226), der an zumindest einer Form der die feste Metallform und die bewegbare Metallform umfassenden Formen angebracht ist und der in dem Formhohlraum (223) angeordnet ist,
- eine Befestigungseinrichtung (227, 228) zur Befestigung des Stempels (226) an einer Form der die feste Metallform und die bewegbare Metallform umfassenden Formen,
- ein vorstehendes Glied (231), welches an der anderen Form der die feste Metallform und die bewegbare Metallform umfassenden Formen angebracht ist zur Bildung der Zentrierungsöffnung (214)
- und ein bewegbares Glied (232), welches in dem vorstehenden Glied (231) auf derselben Achse wie das vorstehende Glied (231) angeordnet ist, wobei das bewegbare Glied (232) zur Bildung eines Durchgangsloches (217) in der Zentrierungsausnehmung (214)relativ zu der anderen Form der die feste Metallform und die bewegbare Metallform umfassenden Formen bewegbar ist.

## Revendications

1. Procédé de formage d'un substrat de disque ayant un renfoncement de centrage (214) et un plan de chargement de référence (212) pour des moyens d'entraînement en rotation de disque, le plan de chargement de référence (212) étant sensiblement parallèle à une zone plane (211a) sur laquelle un faisceau de lumière d'enregistrement et/ou de reproduction est incident lors de l'utilisation, et le plan de chargement de référence (212) dépassant de la zone plane (211a), comportant les étapes consistant à :
injecter une résine synthétique dans une cavité de moule (223) d'un dispositif de moule métallique (220) afin de mouler un substrat de disque ayant un renfoncement central (214) formé dedans, et
poinçonner au moins une partie du renfoncement de centrage (214) par un élément mobile (232) qui dépasse dans la cavité de moule (223) afin de former un trou débouchant (217).

2. Procédé selon la revendication 1, dans lequel le trou débouchant (217) est formé en déplaçant l'élément mobile (223) depuis le plan de chargement de référence (212).

3. Dispositif de moule métallique destiné à mouler un substrat de disque ayant un renfoncement de centrage (214) et un plan de chargement de référence (212) pour des moyens d'entraînement en rotation de disque, le plan de chargement de référence étant sensiblement parallèle à une zone plane (211a) sur laquelle un faisceau de lumière d'enregistrement et/ou de reproduction est incident lors de l'utilisation, le plan de chargement de référence (212) dépassant de la zone plane, comportant :
un moule métallique fixe (221),
un moule métallique mobile (222) monté face au moule métallique fixe (221), mobile vers et à l'écart du moule métallique fixe et destiné à définir avec le moule métallique fixe une cavité de moule (223),
une empreinte (226) montée sur au moins le moule métallique fixe ou le moule métallique mobile et disposée à l'intérieur de la cavité de moule (223),
des moyens de montage (227, 228) destinés à monter l'empreinte (226) sur le moule métallique fixe ou le moule métallique mobile,
un élément saillant (231) monté sur le moule métallique mobile ou le moule métallique fixe afin de former le renfoncement de centrage (214), et
un élément mobile (232) disposé à l'intérieur de l'élément saillant (231) sur le même axe que l'élément saillant (231), l'élément mobile (232) étant mobile par rapport au moule métallique mobile ou le moule métallique fixe afin de former un trou débouchant (217) dans le renfoncement de centrage (214).
